**Europäisches Patentamt**

**European Patent Office**

**Office européen des brevets**

(11) Veröffentlichungsnummer: **0 265 823**
**B1**

(19)

(12) **EUROPÄISCHE PATENTSCHRIFT**

(45) Veröffentlichungstag der Patentschrift:
17.10.90

(21) Anmeldenummer: 87115388.8

(22) Anmeldetag: 21.10.87

(51) Int. Cl.⁵: **B01D 63/02**
**// A61M1/18, A61M16/00**

(54) Verfahren zum Herstellen eines Hohlfaser-Stoffaustauschmoduls und nach diesem Verfahren hergestelltes Modul.

(30) Priorität: **28.10.86 DE 3636583**

(43) Veröffentlichungstag der Anmeldung:
**04.05.88 Patentblatt 88/18**

(45) Bekanntmachung des Hinweises auf die Patenterteilung:
**17.10.90 Patentblatt 90/42**

(84) Benannte Vertragsstaaten:
**CH DE FR GB IT LI NL SE**

(56) Entgegenhaltungen:
**EP-A- 0 089 122**
**WO-A-81/02705**
**US-A- 3 503 515**
**US-A- 4 293 418**

**PRODUCT LICENSING INDEX, RESEARCH DISCLOSURES, Nr. 89, September 1971, Seite 51, Nr. 8924, Havant, GB; "Selective permeation separation devices"**

(73) Patentinhaber: **Drägerwerk Aktiengesellschaft, Moislinger Allee 53-55, D-2400 Lübeck 1(DE)**

(72) Erfinder: **Schmidt, Wolf-Dieter, Dipl.-Ing., Blanckstrasse 24, D-2400 Lübeck(DE)**

# Beschreibung

Die Erfindung betrifft ein Verfahren zur Herstellung eines Hohlfaser-Stoffaustauschmoduls nach dem Oberbegriff des Anspruchs 1.

Hohlfaser-Stoffaustauschmodule werden in zahlreichen verschiedenen Formgebungen hergestellt. Bekannt sind langgestreckte, im wesentlichen zylindrische Gehäuseformen, in denen sich die Hohlfasern koaxial mit dem Gehäuse von einem Ende zum anderen erstrecken. Bekannt sind ferner Ausbildungen von Modulen, bei denen die Hohlfasern im Gehäuse schleifenförmig verlaufen, so daß Eintritts- und Austrittsöffnungen im wesentlichen in einer Ebene liegen.

Derartige Hohlfaser-Stoffaustauschmodule dienen einem gezielten Stoffaustausch zwischen zwei Fluiden (Gas, Flüssigkeit). Das eine Fluid strömt an der Außenseite der Hohlfasern in einem ersten Strömungsraum, während das andere Fluid in dem durch die Innenräume der Hohlfasern bestimmten zweiten Strömungsraum geführt wird. Da die Wände der Hohlfasern bevorzugt aus semipermeablen Membranen bestehen, ist ein selektiver Übertritt von Substanzen aus dem einen Fluid in das andere möglich.

Hohlfaser-Stoffaustauschmodule, im folgenden kurz als "Hohlfasermodule" bezeichnet, werden u.a. im medizinischen Bereich bei Dialysatoren und in der Hämofiltration eingesetzt.

Ein weiteres Anwendungsgebiet bilden Luftbefeuchter, die beispielsweise in Verbindung mit Geräten zur künstlichen Beatmung verwendet werden. Derartige Atemluftbefeuchter sind in der DE-PS 26 17 985 und in der EP-B1 0 009 543 beschrieben. Bei solchen Hohlfasermodulen als Atemluftbefeuchter sind verhältnismäßig große Substanzmengen (Wasser) und Wärmeenergie auszutauschen. Zugleich soll das Modul in den beiden Strömungsräumen einen relativ geringen Strömungswiderstand aufweisen.

Während der durch die Innenräume der Hohlfasern bestimmte zweite Strömungsraum durch die Verwendung von Hohlfasern mit relativ großem Durchmesser bzw. durch eine größere Anzahl von parallelgeschalteten Hohlfasern leicht vergrößert werden kann, ergeben sich Schwierigkeiten, den Strömungswiderstand zwischen den Außenseiten der Hohlfasern, d.h. im ersten Strömungsraum relativ gering zu halten. Wenn die elastischen Hohlfasern keine einwandfreien, gegenseitigen Abstandspositionen einnehmen und teilweise aneinander anliegen, wird der Strömungswiderstand wesentlich erhöht. Eine Vergrößerung des Abstandes der Hohlfasern, welche eine gegenseitige Berührung ausschließen würde, führt zu einer unerwünschten Erhöhung der Abmessungen.

Es sind bereits Methoden bekannt, um den Strömungsverlauf auf der Außenseite der Hohlfasern zu verbessern. So wurden beispielsweise Leitrippen in das Gehäuse eingebaut, die eine Strömungsführung in Querrichtung erzwingen. In der EP-A 0 005 866 ist bei einem in Verbindung mit einer künstlichen Lunge anwendbaren Hohlfasermodul vorgesehen, die Hohlfasern im mittleren Bereich des Moduls einzuschnüren, um das sogenannte "Channeling", d.h. das Entstehen einer verstärkten Strömung zwischen Hohlfaserbündel und Gehäusewand, zu vermeiden. Die vorbekannten Maßnahmen reichen jedoch insbesondere in solchen Fällen nicht aus, in denen hohe Anforderungen an den Stoffaustausch bei kleinen Abmessungen des Hohlfasermoduls gestellt werden.

Bei einem Hohlfasermodul nach der US-A 4 293 418 werden Hohlfasern gezeigt, die jede einzelne für sich oder paarweise von einem Textilfaden umsponnen werden, um auf diese Weise eine Wandberührung während der Bündelung und des Einsetzens des so gewonnenen Hohlfaserbündels zu verhindern. Es ist leicht vorstellbar, daß eine derart aufwendige Umspinnung einer einzelnen Hohlfaser von einem äußeren Durchmesser bevorzugt zwischen 200 und 400 micrometer mit einem entsprechend dünnen Faden, und dessen Windungszahl darüberhinaus in einem bestimmten Größenbereich vorzuliegen hat, eine unverhältnismäßig aufwendige und damit teure Vorrichtung erfordert. Bedenkt man weiterhin, daß mehrere hundert einzelne Fasern und mehr zu einem Bündel zusammengefaßt erst ein einziges funktionsfähiges Stoffaustauschmodul ergeben, läßt sich erahnen, welch hohen technischen Aufwand das vorbekannte Verfahren zu dessen Verwirklichung benötigt.

Die Erfindung geht von der Aufgabenstellung aus, die Leistungsfähigkeit von Hohlfasermodulen durch Verbesserung der Strömungsverhältnisse auf der Außenseite der Hohlfasern zu erhöhen, ohne daß dabei die Abmessungen vergrößert werden.

Die Lösung dieser Aufgabenstellung erfolgt bei einem Verfahren der genannten Art durch die im kennzeichnenden Teil des Anspruchs 1 genannten Verfahrensschritte.

Durch die Anwendung des erfindungsgemäßen Verfahrens wird ein gegenseitiger definierter Abstand der Hohlfasern im Modul und damit eine gleichmäßige Umströmung mit Queraustausch sichergestellt. Außerdem wird vermieden, daß sich wegen des großen Strömungswiderstandes zwischen den Hohlfasern eine verstärkte Strömung längs der Innenwand des Gehäuses ausbildet, die nur wenig zur Austauschleistung des Hohlfasermoduls beitragen kann.

Unter "abstandgebendem Material" sollen im Zusammenhang der Erfindung die verschiedensten, regelmäßig bzw. unregelmäßig geformten Partikel, beispielsweise in Kugel- oder Bruchstückform, sowie schichtartig ausgebildete Materialverteilungen verstanden werden. Dabei muß beim Aufbringen des abstandgebenden Materials dafür gesorgt werden, daß bei auf der Außenseite der Hohlfasern verbleibenden Partikeln bzw. dergleichen eine hinreichende Größe des Strömungsraumes gewährleistet ist.

Das zumindest teilweise Herauslösen des abstandgebenden Materials gibt den Strömungsraum zwischen den Hohlfasern wieder frei. Es kann durch Auflösen der Partikel des abstandgebenden Materials bzw. der Beschichtung mit wässrigen oder organischen Lösungsmitteln erfolgen. Dabei ist darauf zu achten, daß das Lösungmittel weder die Hohlfasern noch die Vergußmasse angreift.

Bevorzugt erscheint die Anwendung von körnigen kristallinen Partikeln, beispielsweise Salzen, wobei insbesondere physiologisch unbedenkliche Substanzen wie NaCl, MgSO$_4$. H$_2$O verwendet werden können. Dieses partikelförmige abstandgebende Material wird besonders einfach in der Weise aufgebracht, daß die Hohlfasern durch einen Wasserdampfstrom angefeuchtet werden und unmittelbar danach das wasserlösliche, partikelförmige Material aufgestreut wird.

Eine vorteilhafte Ausbildung des Verfahrens kann darin bestehen, daß regelmäßig oder unregelmäßig geformte Kunststoffteilchen verwendet werden, bei denen die haftende Verbindung mit den Hohlfasern durch elektrostatische Aufladung hervorgerufen wird.

Nach dem angegebenen Verfahren lassen sich die verschiedensten Ausführungsformen von Hohlfasermodulen herstellen; besonders zweckmäßig erscheint die Ausführungsform, bei der die Hohlfasern in gleichmäßigem gegenseitigem Abstand angeordnet sind.

Die Erfindung wird im folgenden anhand von in den Figuren schematisch dargestellten Ausführungsbeispielen näher erläutert; es zeigen:

Fig. 1 ein Hohlfasermodul im Schnitt,

Fig. 2 einen Ausschnitt aus der Hohlfaserpackung bei einem Modul gemäß Fig. 1 im Längsschnitt,

Fig. 3 einen Ausschnitt ähnlich Fig. 2 im Querschnitt.

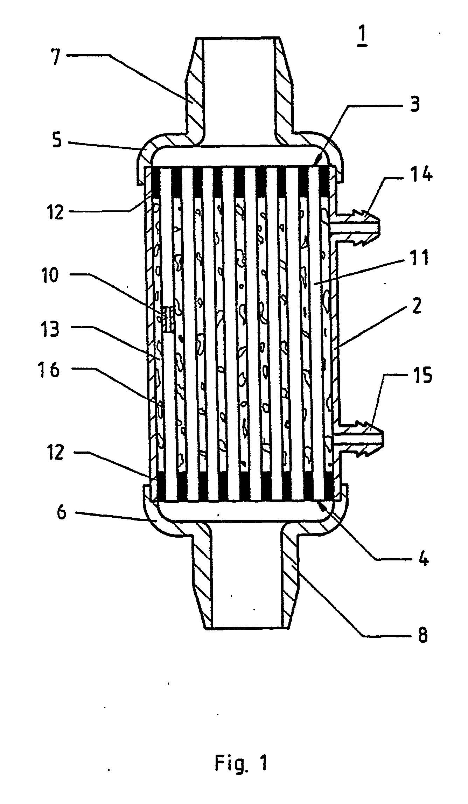

Das in Fig. 1 dargestellte Hohlfasermodul 1 besteht aus einem zylinderförmigen Gehäuse 2 mit zwei kreisförmigen Ausnehmungen 3, 4. Auf die Ausnehmungen 3, 4 sind Endstücke 5, 6 dichtend aufgesetzt. Die Endstücke 5, 6 sind jeweils mit Anschlußstutzen 7,8 versehen, die koaxial zum zylinderförmigen Gehäuse 2 liegen.

In dem Gehäuse 2 sind eine Vielzahl von im wesentlichen parallelliegenden Hohlfasern 11 angeordnet, die im Bereich ihrer Eintritts- bzw. Austrittsausnehmungen jeweils miteinander und mit der Innenwand des Gehäuses 2 durch Vergußmasseschichten 12 dicht vergossen. Als Zugänge zu einem ersten Strömungsraum 13 sind in der Wand des Gehäuses 2 Anschlußstutzen 14,15 vorgesehen. Ein zweiter Strömungsraum 10 wird durch die Innenräume der Hohlfasern 11 gebildet.

Die Hohlfasern sind in Fig. 1 stark vergröbert gezeichnet. In Wirklichkeit ist eine Vielzahl von sehr dünnen Hohlfasern vorhanden, wobei im Falle des dargestellten Atemluftbefeuchters bevorzugt Hohlfasern aus Polysulfon verwendet werden, die einen Innendurchmesser von 1 mm bis 3 mm une eine Wandstärke von 0,05 mm bis 0,2 mm aufweisen. Ein Hohlfasermodul enthält dabei im allgemeinen mehrere hundert Hohlfasern.

Der gleichmäßige Abstand der Hohlfasern 11 wird durch die wenigstens im Herstellungsvorgang an der Außenseite der Hohlfasern 11 liegenden Partikel 16 sichergestellt.

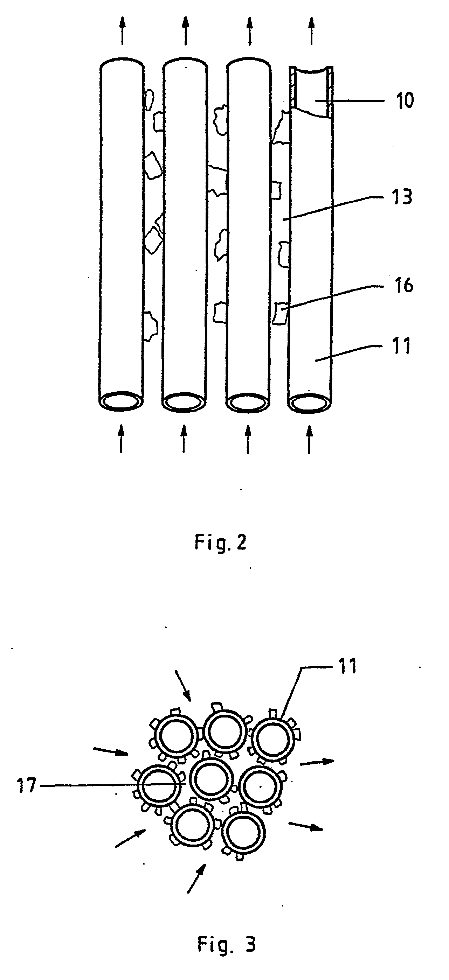

In den Figuren 2 und 3 ist die Anordnung des abstand gebenden Materials und dessen Verteilung zwischen den Hohlfasern 11 erkennbar. Die Partikel sind in Fig. 2 unregelmäßig, jedoch mit im wesentlichen gleicher größter Querschnittsabmessung hergestellt. Durch die Vielzahl der zwischen den Hohlfasern angeordneten Partikel wird ein näherungsweise gleichmäßiger Abstand zwischen den Hohlfasern auch dann erreicht, wenn gekörnte Partikel nur eine näherungsweise gleiche Körnung aufweisen.

Fig. 3 verdeutlicht, daß aufgrund des erfindungsgemäßen Herstellungsverfahrens eine wesentlich verbesserte Querströmung zwischen den Hohlfasern möglich ist. Während die Hohlfasern bei den vorbekannten Modulen teilweise eng aneinander anliegen, wird durch die erfindungsgemäße Ausbildung ein vorgeschriebener Mindestabstand garantiert. Dadurch entstehen Längskanäle 17, durch die das die Außenseite der Hohlfasern umströmende Fluid fließt.

Wie erwähnt, können die Partikel 16 gemäß einer Ausführungsform des erfindungsgemäßen Verfahrens nach dem Vergießen aus dem Modul entfernt werden. Diese Arbeitsweise ist insbesondere dann zweckmäßig, wenn die Hohlfasern eine ausreichende Stabilität aufweisen, so daß sie ihre Lage im Modul beibehalten, nachdem die abstandgebenden Partikel entfernt sind.

**Patentansprüche**

1. Verfahren zum Herstellen eines Hohlfaser-Stoffaustauschmoduls (1), bei dem eine Vielzahl von parallel verlaufenden Hohlfasern (11) auf ihrer Außenfläche mit einem abstandgebenden haftfähigen Material (16) versehen sind, zu einem Bündel zusammengefaßt in ein Gehäuse (2) eingeführt und an ihren Enden mit Vergußmasse (12) miteinander und mit der Innenwand des Gehäuses (2) dicht vergossen werden, wobei zwischen der Innenwand des Gehäuses (2) und den Außenseiten der Hohlfasern (11) ein erster Strömungsraum (13) gebildet wird, der von dem durch die Innenräume der Hohlfasern (11) bestimmten zweiten Strömungsraum (10) getrennt ist, dadurch gekennzeichnet, daß als abstandgebendes Material auf der Außenfläche der Hohlfasern (11) ein partikelförmiger löslicher Belag (16) aufgebracht wird und daß die Hohlfasern (11) anschließend so eng gebündelt werden wie es durch die Dicke des Belages (16) von sich berührenden Hohlfasern (11) festgelegt ist.

2. Verfahren nach Anspruch 1, dadurch gekennzeichnet, daß das abstandgebende Material ein wasserlösliches Salz ist.

3. Verfahren nach Anspruch 2, dadurch gekennzeichnet, daß das Salz körnig verwendet wird, und daß durch Anfeuchten der Hohlfasern (11) eine haftende Verbindung erzeugt wird.

4. Verfahren nach Anspruch 1, dadurch gekennzeichnet, daß das abstandgebende Material aus Kunststoffpartikeln besteht, und daß die haftende Verbindung mit den Hohlfasern (11) durch elektrostatische Aufladung hervorgerufen wird.

## Claims

1. Method for producing a hollow-fibre mass exchange module (1), wherein a plurality of hollow fibres (11) extending in parallel are provided on their outer surface with an adhesive spacing material (16), are guided into a housing (2) combined to form a bundle, and are tightly sealed at their ends to one another and to the inside wall with sealing compound (12), wherein there is formed between the inside wall of the housing (2) and the outer sides of the hollow fibres (11) a first flow space (13) which is separated from the second flow space (10) defined by the interiors of the hollow fibres (11), characterised in that a soluble coating (16) in particulate form is applied to the outer surface of the hollow fibres (11) to act as the spacing material and in that the hollow fibres (11) are then bundled together as tightly as the thickness of the coating (16) of mutually touching hollow fibres (11) allows.

2. Method according to claim 1, characterised in that the spacing material is a water-soluble salt.

3. Method according to claim 2, characterised in that the salt is used in granular form, and in that an adhesive connection is produced by dampening the hollow fibres (11).

4. Method according to claim 1, characterised in that the spacing material consists of particles of synthetic material, and in that the adhesive connection to the hollow fibres (11) is produced by electrostatic charging.

## Revendications

1. Procédé de fabrication d'un module d'échange de matière à fibres creuses (1) dans lequel une pluralité de fibres creuses (11) parallèles, pourvues, sur leur face extérieure, d'une matière adhérente (16) les tenant écartées, sont introduites, réunies en faisceau, dans une enveloppe (2) et sont étroitement scellées entre elles et avec la paroi intérieure de l'enveloppe (2), à l'aide d'une pâte de scellement (12), un premier volume d'écoulement (13) qui est séparé du deuxième volume d'écoulement (10), défini par les cavités intérieures des fibres creuses (11), étant formé sur les faces extérieures des fibres creuses (11), caractérisé en ce qu'on applique sur la face extérieure des fibres creuses (11), comme matière les maintenant écartées, un revêtement (16) soluble de particules et en ce que les fibres creuses (11) sont ensuite réunies en faisceau aussi étroitement que le permet l'épaisseur du revêtement (16) des fibres creuses (11) en contact l'une avec l'autre.

2. Procédé selon la revendication 1, caractérisé en ce que la matière d'écartement est un sel soluble dans l'eau.

3. Procédé selon la revendication 2, caractérisé en ce qu'on utilise le sel en grains et en ce qu'on produit une liaison par adhérence, par mouillage des fibres creuses (11).

4. Procédé selon la revendication 1, caractérisé en ce que la matière d'écartement est constituée de particules de matière plastique et en ce que la liaison par adhérence avec les fibres creuses (11) est obtenue par une charge électrostatique.

Fig. 1

Fig. 2

Fig. 3